# EUROPÄISCHE PATENTSCHRIFT

(11) **EP 2 737 609 B1**
(45) Veröffentlichungstag und Bekanntmachung des Hinweises auf die Patenterteilung: **09.10.2019**
(21) Anmeldenummer: 12729861.0
(22) Anmeldetag: 05.06.2012
(51) Int. Cl.: H02K 5/128, H02K 9/197

(54) **ELEKTRISCHE MASCHINE**
ELECTRIC MACHINE
MACHINE ELECTRIQUE

(30) Priorität: 25.07.2011 DE 202011103647 U
(43) Veröffentlichungstag der Anmeldung: 04.06.2014
(73) Patentinhaber: Baumüller Nürnberg GmbH, 90482 Nürnberg (DE)
(72) Erfinder: GUTJAHR, Frank, 92268 Etzelwang (DE); LEMKE, Peter, 91126 Schwabach (DE); VEEH, Michael, 97271 Kleinrinderfeld (DE)
(74) Vertreter: FDST Patentanwälte
(86) Internationale Anmeldenummer: PCT/EP2012/002365
(87) Internationale Veröffentlichungsnummer: WO 2013/013737

(56) Entgegenhaltungen:
- EP-A1- 0 111 764
- EP-A1- 1 059 722
- DE-C1- 4 404 235
- US-A- 4 952 429

## Beschreibung

Die Erfindung betrifft eine elektrische Maschine gemäß dem Oberbegriff des Anspruchs 1. Eine derartige elektrische Maschiene ist aus der EP 1 059 722 A1 bekannt. Unter elektrischer Maschine wird hierbei insbesondere ein Elektromotor oder Generator, vorzugsweise mit integriertem Umrichter, als motorisch bzw. generatorisch arbeitender Abtrieb eines Aggregats oder Hilfsaggregats eines Nutzfahrzeuges verstanden.

Die elektrische Maschine wird in der Regel mittels einer Leistungselektronik (Umrichter, insbesondere Frequenzumrichter, DC/AC- bzw. AC/DC-Wandler oder dergleichen) betrieben. Die Elektronik weist geeigneterweise eine Brückenschaltung aus Halbleiterschaltern auf, deren Anzahl ebenso wie die Anzahl der Brückenzweige von der Phasenzahl der elektrischen Maschine abhängt, wobei drei- oder mehrphasige Motoren und Generatoren üblich sind.

Je nach Betrieb der elektrischen Maschine als Motor oder als Generator wird die elektrische Leistung entweder der Maschinen für die gewünschte Drehzahl und das bestimmungsgemäße Drehmoment zugeführt, oder der elektrischen Maschine wird die elektrische Leistung entnommen und für nachgeschaltete Aggregate, beispielsweise eines Nutzfahrzeuges, entnommen. In der Betriebsweise als Generator wird der generatorisch erzeugte mehrphasige Wechselstrom mittels der Elektronik (Umrichter) in einen Gleichstrom gewandelt, der dann beispielsweise über einen Zwischenkreis dem jeweiligen Aggregat oder Verbraucher zugeführt wird.

Der Stator der elektrischen Maschine wird mittels eines Kühlfluids gekühlt, um die infolge der betriebsbedingten Verlustleistung auftretende Wärme abzuführen. Das Kühlfluid wird abhängig vom Einsatzgebiet und von der Leistung der elektrischen Maschine gewählt, wobei üblicherweise Öl verwendet wird. Das Kühlfluid wird vorzugsweise mittels einer Pumpe gefördert, die von der elektrischen Maschine selbst oder mittels eines separaten Antriebs betätigt wird.

Um zu vermeiden, dass der Rotor der elektrischen Maschine durch das Kühlfluid aufgrund einer erhöhten Reibung abgebremst und somit der Wirkungsgrad der elektrischen Maschine verringert wird, weisen diese ein sogenanntes Spaltrohr auf. Dieses Spaltrohr befindet sich zumindest teilweise in dem Spalt zwischen dem Stator und dem Rotor und trennt diese voneinander. Herkömmliche Spaltrohre bestehen beispielsweise aus Metall oder glasfaserverstärkter Kunststoff.

In der DE 10 2009 052 932 A1 ist eine elektrische Maschine mit einem Stator innerhalb eines Statorgehäuse offenbart. Der Stator umfasst ein Wicklungspaket, welches einen sich axial erstreckenden Wirkbereich aufweist. In diesem ist das Wicklungspaket eingerichtet, um mit dem Rotor elektrodynamisch zusammenzuwirken. Die Wickelköpfe des Wicklungspakets sind hierbei außerhalb des Wirkbereichs angeordnet. Das Stotorgehäuse wird mittels eines Spaltrohres hermetisch vom Rotor der elektrischen Maschine getrennt. Das Spaltrohr erstreckt sich axial lediglich am Wirkbereich des Wicklungspakets, ist also vergleichsweise kurz.

Die EP 1 059 722 A1 offenbart einen Spalttopf aus faserverstärktem Kunststoff, der eine Wendel mit einem Winkel zwischen 5° und 90° aufweist. Der Spalttopf wird mittels Spritzgussverfahrens erstellt, wobei die Fasern aufgrund der Wendel nicht nur lediglich axial angeorndet werden. Die Wanddicke des Spalttopfes beträgt beispielsweise 1 mm.

Die DE 44 04 235 C1 offenbart einen Spalttopf aus Faserverbundwerkstoff für ein elektrisches Antriebsaggregat, insbesondere eine Kreiselpumpe. Die Faserverbundschichten sind gewickelt, um eine hohe Festigkeit und Formbeständigkeit des Spalttopfes zu erreichen.

Aus der US 4,952,426 A ist bekannt, einen Spalttopf aus einem Faserverbundwerkstoff (kohlefaserverstärktem Kunststoff oder kohlefaserverstärktem Kohlenstoff) mit einer Wanddicke von 1 mm oder 0,5 mm und einem Wickelwinkel (Helixwicklung) von 10° bis 40° herzustellen.

Aus der EP 0 111 764 A1 ein Spaltrohr oder Spalttopf aus faserverstärktem Kunststoff mit einer Manteldicke zwischen 1 mm und 1,5 mm bekannt.

In der DE 10 2008 014 379 A1 ist ein Elekotromotor mit einem in einem Rotorraum angeordnetem Rotor bekannt. Der Rotorraum ist druckdicht ausgestaltet.

Der Erfindung liegt die Aufgabe zugrunde, eine verbesserte elektrische Maschine anzugeben.

Diese Aufgabe wird erfindungsgemäß gelöst durch die Merkmale des Anspruchs 1. Vorteilhafte Ausgestaltungen, Weiterbildungen und Varianten sind Gegenstand der Unteransprüche.

Die elektrische Maschine ist beispielsweise ein elektrischer Generator oder besonders bevorzugt ein Elektromotor. Die elektrische Maschine weist einen Stator aus insbesondere einem ferromagnetischen Material auf. Zum Beispiel umfasst der Stator eine Anzahl von zu einem Blechpakte zusammengefügte Lamellen, die im Wesentlichen senkrecht zu einer axialen Richtung der elektrischen Maschine angeordnet sind. Insbesondere sind die Lamellen rechteck- oder kreisförmig. Ferner weist der Stator ein Wicklungspaket mit elektrischen Leitern auf, die in axialer Richtung verlaufen, und die um die Lamellen geschlungen und/oder in dafür vorgesehenen Nuten (Kanälen) durch die Lamellen hindurch geführt sind. Außerhalb des Blechpakts sind Wickelköpfe angeordnet, die die axial verlaufenden Leiter elektrisch miteinander verbinden.

Der Stator weist zentral und in axialer Richtung verlaufend eine Aussparung auf, innerhalb derer in einem Rotorraum ein Rotor angeordnet ist. Der Rotor ist hierbei entlang einer Rotationsrichtung frei beweglich. Mit anderen Worten ist es möglich, den Rotor um eine Rotationsachse zu drehen, die entlang der axialen Richtung verläuft, ohne dass dieser den Stator berührt. Der Rotor ist beispielsweise aus einem Blechpaket aufgebaut, an dem oder in dem insbesondere eine Anzahl von Permanentmagneten oder Elektromagneten angebracht sind. Ebenfalls denkbar wäre, dass der Rotor nach einer Art eines Induktionsmotors keinen Magneten aufweist.

Der Rotor wird mittels einer Bestromung des Wickelpakets des Stators in Drehung versetzt oder eine Drehung des Rotors führt zu einem elektrischen Stromfluss innerhalb des Wickelpakets. Hierbei ist das sich zwischen dem Rotor und dem Stator ausbildende elektromagnetische Feld insbesondere im Bereich des Blechpakets des Rotors und/oder des Stators im Wesentlichen konstant und insbesondere maximal, jedoch zumindest vergleichsweise groß. Der Bereich des vergleichsweise großen elektromagnetischen Feldes wird als Wirkbereich bezeichnet. Insbesondere wird als Wirkbereich derjenige Bereich zwischen dem Rotor und dem Stator bezeichnet, dessen axiale Projektion von einer Projektion auf die axiale Richtung von zumindest einem der Blechpakete des Stators oder des Rotors abgedeckt ist.

Der Fluss des elektrischen Stroms durch das Wicklungspaket erhitzt den Stator. Zur Vermeidung einer Beschädigung des Stators wird dieser daher mittels eines Kühlfluids gekühlt. Das Kühlfluid ist beispielsweise ein Öl, welches insbesondere die Eigenschaft eines elektrischen Isolators aufweist.

Zum Beispiel wird das vergleichsweise kalte Kühlfluid in einen den Stator aufnehmenden Statorraum hineingeleitet. Dort umspült das Kühlfluid die Lamellen des Stators, und/oder innerhalb der Lamellen befinden sich Kühlkanäle, durch die das Kühlfluid geleitet wird. Auf diese Weise wird das Kühlfluid erwärmt und der Stator gekühlt. Das erwärmte Kühlfluid wird aus dem Statorraum abgepumpt oder aus diesem herausgefördert und außerhalb des Maschinengehäuses insbesondere mittels eines Wärmetauschers gekühlt. Um einen Fluss des Kühlfluids durch den Statorraum zu gewährleisten, steht das Kühlfluid unter einem Druck.

Zur Vermeidung eines Eindringens des Kühlfluids in den Rotorraum befindet sich zwischen dem Rotor und dem Stator ein Spaltrohr. Auf diese Weise ist es ermöglicht, den Rotorraum frei von dem Kühlfluid zu halten, so dass bei einer Rotation desselben vergleichsweise geringe Verluste auftreten. Insbesondere werden mittels des Spaltrohrs sogenannte Panschverluste des Rotors vermieden.

Das Spaltrohr ist einstückig und hohlzylindrisch mit einem Rohrmantel, der aus einem Faserverbundwerkstoff hergestellt ist. Mit anderen Worten besteht der Rohrmantel aus einer oder einer Anzahl von Faser, die in eine sogenannte Matrix eingebettet ist bzw. sind. Die Dicke des Rohrmantels, also die radiale Ausdehnung des Rohrmantels zwischen dessen Innendurchmesser und dessen Außendurchmesser beträgt zwischen 2,5mm und 0,5mm. Auf diese Weise ist das Spaltrohr außendruckstabil und ein Beulversagen des Spaltrohrs kann ausgeschlossen werden. Dennoch ist das Spaltrohr vergleichsweise dünn, so dass die elektrische Maschine einen vergleichsweise hohen Wirkungsgrad aufweist.

Geeigneterweise wird das Spaltrohr direkt von dem Stator und insbesondere von dessen Blechpaket umgeben. Zumindest ist ein Spalt zwischen dem Spaltrohr und dem Stator vergleichsweise gering. Der Stator hat somit vorzugsweise eine stabilisierende Wirkung auf das Spaltrohr, dessen Manteldicke somit verringert werden kann. Bei einer vergleichsweise großen Aussendruckbelastung würde sich das Spaltrohr nach innen einbeulen. Im Zuge der Einbeulung nach innen würden Bereiche des Spaltrohrs nach außen gedrückt. Diese Bereiche befinden sich beispielsweise bei einem sich frei befindlichen Spaltrohr und einer Aussendruckbelastung entlang einer Druckrichtung, die durch die Mittelachse des Spaltrohrs verläuft, entlang einer Ausdehnungsrichtung, die ebenfalls durch die Mittelachse des Spaltrohrs, jedoch senkrecht zu der Druckrichtung verläuft. Mit anderen Worten würde der kreisförmige Querschnitt des Spaltrohrs aufgrund dieser Aussendruckbelastung elliptisch verformt. Da der an dem Spaltrohr anliegende Stator diese Verformung nach außen verhindert, ist die Einbeulung des Spaltrohrs nach innen zuverlässig unterbunden.

In einer bevorzugten Ausführungsform der Erfindung ist die Manteldicke des Spaltrohres kleiner als 2 mm und größer als 1mm und beispielsweise ist die Manteldicke größer als 1,2mm und insbesondere kleiner als 1,7mm. Besonders bevorzugt beträgt die Manteldicke zwischen 1,3mm und 1,5mm und insbesondere 1,4mm.

Zweckmäßigerweise erstreckt sich das Spaltrohr über den Wirkbereich zwischen dem Stator und dem Rotor hinaus. Insbesondere ist zumindest das Spaltrohr länger als das Blechpaket des Stators und derart innerhalb des Stators angeordnet, dass das gesamte Blechpaket gegenüber der Rotationsachse abgeschirmt ist. Auf diese Weise ist es ermöglicht, den Wirkbereich im Wesentlichen frei von ferromagnetischen Materialien zu halten, die den Wirkungsgrad der elektrischen Maschine negativ beeinflussen. Sollte sich dort nämlich ein derartiges Material befinden, so könnten in diesem parasitäre elektrische Ströme entstehen, die das elektromagnetische Feld schwächen könnten.

Zwar nimmt mit zunehmender Länge des Spaltrohrs die Anfälligkeit auf ein Eindrücken desselben infolge hohen Außendrucks zu, also der kritische Beuldruck ab. Jedoch ist diese Zunahme mit zunehmender Länge des Spaltrohrs geringer. Dahingegen ist die Manteldicke des Spaltrohrs im Wesentlichen quadratisch von dem Außendruck abhängig. Somit ist zwar der kritische Beuldruck leicht reduziert, bei der Herstellung der elektrischen Maschine besteht jedoch keine Fertigungsproblematik aufgrund eines etwaigen Anschlusses des Spaltrohrs an weitere Elemente innerhalb des Stators.

Insbesondere wird die Faser des Faserverbundwerkstoffs bei der Herstellung des Spaltrohrs entlang eines Wickelwinkels zu der Rohrlängsrichtung gewickelt. Ein Wickelwinkel von 90° bezeichnet einen Winkel, der senkrecht zu der Rohrlängsrichtung ist. Ein Spaltrohr mit einem Wickelwinkel von 90° wäre demnach im Wesentlichen aus einer Anzahl von aneinandergereihten Ringen aufgebaut.

In einer zweckmäßigen Ausführungsform der Erfindung ist der Winkel jedoch kleiner als 90° und größer als 70°. Geeigneterweise ist der Wickelwinkel hierbei größer als 75°. Auf diese Weise wird eine vergleichswese große Stabilität des Spaltrohrs in radialer Richtung realisiert, ohne ein Auseinanderfallen des Spaltrohrs in einzelne Scheiben in Kauf nehmen zu müssen.

Die Faser besteht bevorzugt aus Glas und der Faserverbundwerkstoff ist ein glasfaserverstärkter Kunststoff (GFK). Der Kunststoff ist insbesondere Epoxidharz. Ebenfalls denkbar wäre, dass der Faserverbundwerkstoff ein kohlenstofffaserverstärkter Kunststoff (CFK) ist.

In einer besonders geeigneten Ausführung der Erfindung ist der Wickelwinkel größer als 80° und beträgt zumindest 82°. Insbesondere ist der Wickelwinkel 88°, da es sich gezeigt hat, dass ein Wickelwinkel von 88° eine besonders hohe Stabilität des Spaltrohrs in radialer Richtung bedingt und dabei ein für die Anwendung innerhalb der elektrischen Maschine geeignete axiale Stabilität aufweist.

Zweckmäßigerweise ist auf den Rohrmantel des Spaltrohrs eine Abdichtschicht aufgetragen. Die Abdichtschicht umgibt das Spaltrohr außenseitig und befindet sich somit zwischen dem Stator und dem Spaltrohr, wobei diese an dem Spaltrohr anliegt. Die Abdichtschicht verhindert ein Eindringen des Kühlfluids in das Spaltrohr, welches auf diese Weise aufgeweicht oder auf eine andere Weise beschädigt werden könnte. Die Abdichtschicht besteht vorzugsweise aus einem Polymer.

Vorteilhafterweise steht die zumindest eine Stirnfläche, geeigneterweise jedoch stehen beide Stirnflächen des Spaltrohrs in keinem Kontakt mit einem weiteren Element der elektrischen Maschine. Zumindest jedoch ist das Spaltrohr stirnseitig unbelastet, was zu einer vergleichsweise geringen mechanischen Belastung des Spaltrohrs in axialer Richtung führt. Auf diese Weise ist es ermöglicht, das Spaltrohr vorwiegend auf dessen radiale Stabilität hin zu optimieren.

Das Spaltrohr ist beidseitig axial auf jeweils eine Manschette aufgeschoben. Die jeweilige Manschette liegt innen an dem Spaltrohr an und dient als ein Positionierungselement für das Spaltrohr. Aufgrund des Innenanliegens der Manschette an dem Spaltrohr können dessen Stirnseiten frei sein, also ohne jeglichen Kontakt. Ebenso wirkt die Manschette als eine Versteifung des Spaltrohrs in radialer Richtung. Die Manschette besteht insbesondere aus einem Stahl (Edelstahl) und ragt nicht in den Wirkbereich zwischen dem Stator und dem Rotor hinein.

Jede der Manschetten ist auf einen Kragen eines Lagerschildes des Maschinengehäuses aufgesetzt. Der Kragen des Lagerschildes verläuft demnach in radialer Richtung innerhalb der Manschette. Beispielsweise ist der Kragen einstückig mit dem Lagerschild verbunden. Zweckmäßigerweise ist das Spaltrohr beidseitig auf eine Manschette aufgesetzt, die wiederum jeweils auf einen Kragen aufgesetzt ist.

Die jeweilige Manschette ist in axialer Richtung in einen ersten Axialabschnitt und einen zweiten Axialabschnitt unterteilt oder weist diese zumindest auf. Der erste Axialabschnitt liegt zumindest teilweise in dem Spaltrohr ein, steht also im direkten oder indirekten Kontakt mit dem Spaltrohr, beispielsweise über eine Dichtung. Hierbei ist der radiale Abstand der äußersten Oberfläche des ersten Abschnitts von der Rotationsachse im Wesentlichen gleich oder nur vergleichsweise geringfügig kleiner als der radiale Abstand der innersten Oberfläche des Spaltrohrs.

An den ersten Axialabschnitt schließt sich der zweite Axialabschnitt an, dessen äußerste Oberfläche einen radialen Abstand von der Rotationsachse aufweist, der im Wesentlichen dem radialen Abstand der äußeren Mantelfläche des Spaltrohrs von der Rotationsachse entspricht. Mit anderen Worten fluchtet der zweite Axialabschnitt mit dem Spaltrohr.

Bei der Herstellung des Spaltrohrs wird die Faser beispielspeise direkt auf der Manschette aufgebracht und somit eine feste Verbindung zwischen der Manschette und dem Spaltrohr erstellt. In einer geeigneten Ausführung jedoch, wird das Spaltrohr separat von der Manschette hergestellt. Damit die Kühlflüssigkeit auch bei einem erhöhten Druck nicht zwischen der Manschette und dem Spaltrohr hindurchtritt, befindet sich zwischen der Manschette und dem Spaltrohr eine Dichtung. Die Dichtung ist insbesondere ein O-Ring.

Zweckmäßigerweise ist die jeweilige Manschette gegenüber dem Kragen des Lagerschilds mittels einer weiteren Dichtung abgedichtet. Die elektrische Maschine kommt daher mit vergleichsweise wenigen Dichtstellen aus, die ein Restrisiko von Undichtigkeiten darstellen könnten.

Zweckmäßigerweise ist die axiale Wärmeausdehnung des Maschinengehäuses im Wesentlichen gleich der des Spaltrohrs. Beispielsweise werden hierfür der Wickelwinkel und/oder das Material der Faser des Spaltrohrs und/oder dessen Kunststoff geeignet gewählt. Denkbar wäre auch das Maschinengehäuse an das Spaltrohr anzupassen. Auf diese Weise dehnen sich bei einer Erwärmung der elektrischen Maschine während des Betriebes das Spaltrohr und das Maschinengehäuse im Wesentlichen gleichmäßig aus, so dass keine Undichtigkeiten zwischen dem Spaltrohr und dem Gehäuse entstehen, durch die beispielsweise die Kühlflüssigkeit in den Rotorraum gelangen könnte. Ebenso wird eine mechanische Belastung des Spaltrohrs und des Maschinengehäuses in axialer Richtung vermieden, wenn die Verbindung zwischen diesen vergleichsweise stark ist.

Zweckmäßigerweise weist die elektrische Maschine eine Leistung auf, die kleiner als 1 MW ist und vorteilhafterweise zwischen 50 kW und 0,5 MW beträgt. Insbesondere leistet der Elektromotor während des Normalbetriebs unter 500kW, wobei insbesondere während eines etwaigen Überlastbetriebs die Leistung kurzzeitig größer als diese Grenze ist. Bei diesen Leistungsgrenzen ist es gewöhnlicherweise notwendig, den Stator mit dem Kühlfluid zu kühlen. Hierbei steht das Kühlfluid geeigneterweise unter einem Druck von bis zu 3bar, um ein Strömen des Kühlfluid durch den Stator zu gewährleisten. Bei diesem Druck beult das Spaltrohr nicht in Richtung des Rotors aus und der sichere Betrieb der elektrischen Maschine ist gewährleistet.

Nachfolgend wird ein Ausführungsbeispiel der Erfindung anhand einer Zeichnung näher erläutert. Darin zeigen:
- Fig. 1: in einer Schnittdarstellung eine elektrische Maschine mit einem Spaltrohr, und
- Fig. 2: perspektivisch das Spaltrohr.

Einander entsprechende Teile sind in alle Figuren mit den gleichen Bezugszeichne versehen.

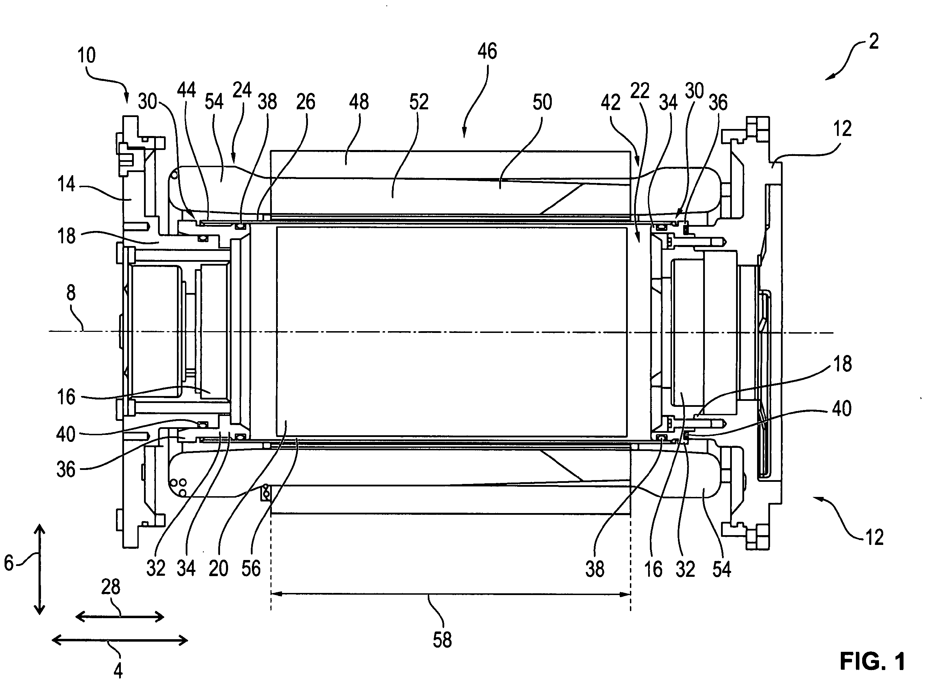

In Figur 1 ist eine elektrische Maschine 2 mit einer axialen Richtung 4 und einer radialen Richtung 6 in einer Schnittdarstellung dargestellt. Der Schnitt verläuft entlang einer Rotationsachse 8, die parallel zu der axialen Richtung 4 ist. Die elektrische Maschine 2 ist insbesondere ein Elektromotor, der innerhalb eines Nutzfahrzeugs, beispielsweise innerhalb einer sogenannten Pistenraupe, zum Antrieb desselben oder zum Antrieb von etwaigen Nebenaggregaten verwendet wird. Die Leistung des Elektromotors beträgt beispielsweise 140kW.

Die elektrische Maschine 2 weist ein Maschinengehäuse 10 aus Aluminium auf, von dem hier ein A-seitiger Lagerschild 12 und ein B-seitiger Lagerschild 14 dargestellt sind. An den Lagerschilden 12, 14 sind Lager 16 angebracht, beispielsweise Kugellager. Die Lager 16 befinden sich hierbei innerhalb jeweils eines Kragens 18. Jeder Kragen 18 ist hohlzylindrisch und ragt in das Innere des Maschinengehäuses 10 hinein. Innerhalb der Lager 16 befindet sich eine nicht dargestellte zylinderförmige Welle. Die Welle ist konzentrisch mit der Rotationsachse 8 und den Lagern 16 angeordnet. Im Betrieb der elektrischen Maschine 2 rotiert die Welle um sich selbst und die Rotationsachse 8. Mit der Welle stehen beispielsweise die Nebenaggregate des Nutzfahrzeugs in Wirkverbindung.

An der Welle konzentrisch angebracht ist ein schematisch gezeigter Rotor 20. Der Rotor 20 weist beispielsweise ein Blechpaket aus einzelnen Lamellen auf, innerhalb derer oder an denen Permanentmagnete befestigt sind. Mit anderen Worten handelt es sich bei der elektrischen Maschine 2 um einen permanenterregten Elektromotor. Der Rotor 20 befindet sich innerhalb eines Rotorraums 22, der mit Luft gefüllt ist. Der Rotorraum 22 ist gegenüber einem Statorraum 24 mittels eines Spaltrohrs 26 abgegrenzt. Die Rohrlängsrichtung 28 des Spaltrohrs 26 ist parallel zu der Rotationsachse 8 und der axialen Richtung 4.

Das Spaltrohr 26 ist an dessen Stirnseiten 30 unbelastet, es wirken also aufgrund der Montage des Spaltrohrs 26 innerhalb des Maschinengehäuses 10 keine oder vergleichsweise geringe axiale Kräfte auf die Stirnseiten 30. Um auch während des Betriebs der elektrischen Maschine 2 eine axiale Belastung des Spaltrohrs 26 zu vermeiden, weist dieses die gleiche Wärmeausdehnung in axialer Richtung 4 auf wie das übrige Maschinengehäuse 10. Das Spaltrohr 26 und das Maschinengehäuse 10 weisen somit einen gleichen Temperaturkoeffizienten auf. Dehnt sich also das Spaltrohr 26 aufgrund einer Wärmezufuhr in axialer Richtung 4 aus, so dehnt sich das Maschinengehäuse 10 ebenfalls aus, so dass dem Spaltrohr 26 innerhalb des Maschinengehäuses 10 genügend Raum (Volumen) für die thermische Ausdehnung zur Verfügung steht, ohne dass sich dieses verkeilt.

Das Spaltrohr 26 ist beidseitig auf eine Manschette 32 aus Stahl aufgesetzt. Jede Manschette 32 weist einen ersten Axialabschnitt 34 und einen sich daran anschließenden zweiten Axialabschnitt 36 auf. Der zweite Axialabschnitt 36 fluchtet mit der Außenseite des Spaltrohrs 26, wobei sich zwischen dem zweiten Axialabschnitt 36 und den Stirnseiten 30 des Spaltrohrs 26 ein freier Bereich befindet. Der erste Axialabschnitt 34 ragt in das Spaltrohr 26 hinein und dient als ein Montagepunkt für das Spaltrohr 26.

Mit anderen Worten liegt der erste Axialabschnitt 34 zumindest teilweise direkt oder indirekt über ein weiteres Element an der Innenseite des Spaltrohrs 26 an. Auf diese Weise wird das Spaltrohr 26 gegenüber einer Einbeulung nach innen stabilisiert. In dem dargestellten Elektromotor befindet sich zwischen dem erste Axialabschnitt 34 und dem Spaltrohr eine Dichtung 38 in Form eines sogenannten O-Rings aus Gummi. In den erste Axialabschnitt 34 ist eine Vertiefung eingebracht, innerhalb derer sich die Dichtung 38 befindet.

Jede Manschette 32 ist auf einen der Kragen 18 aufgesetzt und mittels einer weiteren Dichtung 40 abgedichtet. Der Rotorraum 22 ist somit mittels der Manschetten 32, der Dichtungen 38, 40 und des Spaltrohrs 26 im Wesentlichen hermetisch gegenüber dem Statorraum 26 abgedichtet, der mit einem Kühlfluid 42 befüllt ist.

Während des Betriebs der elektrischen Maschine 2 steht das Kühlfluid 42 unter einem Druck, welcher beispielsweise 3bar beträgt. Das Spaltrohr 26 ist derart gefertigt, dass ein solcher Druck, oder auch ein Spitzendruck während einer Überlastphase von insbesondere bis zu 9bar, das Spaltrohr 26 nicht nach innen in den Rotorraum 22 eindrückt oder nach innen gerichtete Beulen, Dellen oder Verbiegungen in dem Spaltrohr 26 hervorruft. Damit das Kühlfluid 42 nicht in das Spaltrohr 26 selbst eindringt, ist dieses auf dessen Oberfläche mittels einer Abdichtschicht 44 überzogen. Die Abdichtschicht 44 besteht aus einem Polymer. Die Kühlflüssigkeit 42 ist ein Isolieröl und dient der Kühlung eines Stators 46, der innerhalb des Statorraums 24 angeordnet ist.

Der Stator 46 weist ein Blechpaket 48 auf, das aus einer Anzahl von aufeinandergestapelten Lamellen besteht. In die Lamellen sind Kanäle im Wesentlichen in axialer Richtung 4 eingebracht, durch die die Kühlflüssigkeit 42 strömen kann. Ebenfalls innerhalb der Lamellen befinden sich Öffnungen, durch die ein Wickelpaket 50 des Stators 46 gelegt ist. Das Wickelpaket 50 besteht im Wesentlichen aus einem elektrischen Leiter und weist einen axialen Abschnitt 52 auf, innerhalb dessen der elektrische Leiter vorwiegend parallel zu der axialen Richtung 4 verläuft, und der sich innerhalb des Blechpakets 48 befindet. An den axialen Abschnitt 52 schließen sich in axialer Richtung 4 beidseitig sogenannte Wickelköpfe 54 an. Innerhalb der Wickelköpfe 54 ist der elektrische Leiter umgeschlagen, so dass dieser wieder in den axialen Abschnitt 52 geführt ist.

Ferner weisen die Lamellen des Blechpakets 48 mittig eine runde Aussparung auf, innerhalb derer das Spaltrohr 26 angeordnet ist. Der Durchmesser dieser Aussparung ist beispielsweise 150mm, und der Außendurchmesser des Spaltrohrs 26 weist demgegenüber ein Untermaß von insbesondere 0,3mm auf. Mit anderen Worten ist der Außendurchmesser des Spaltrohrs 149,7mm, wobei dieser auch größer sein kann. Die Wärmeausdehnung des Spaltrohrs 26 in radialer Richtung 6 ist auf den Stator 46 und insbesondere auf das Blechpaket 48 abgestimmt, vergleichbar mit der Wärmeausdehnung in axialer Richtung 4, die auf das Maschinengehäuse 10 abgestimmt ist.

Während des Betriebs der elektrischen Maschine 2 überschreitet der Außendurchmesser des Spaltrohrs 26 nicht den Durchmesser der Aussparung innerhalb des Blechpaketes 48. Auf diese Weise wird eine Beschädigung des Spaltrohrs 26 vermieden, welche zu einem sogenannten Beulversagen, also einer Zerstörung des Spaltrohrs 26 und/oder einem Eindringen des Kühlfluids 42 in den Rotorraum 22 führen kann.

Das Spaltrohr 26 ist innerhalb des Blechpaktes 48 derart angeordnet, dass dieses sich über einen elektromagnetischen Wirkbereich 56 zwischen dem Stator 46 und dem Rotor 20 hinaus erstreckt. Der Wirkbereich 56 ist derjenige Bereich zwischen dem Stator 46 und dem Rotor 20, innerhalb dessen das von diesen erzeugte elektromagnetische Feld vergleichsweise groß und annähernd konstant ist. Die Länge 58 des Wirkbereichs 56 korrespondiert bei der dargestellten elektrischen Maschine mit der Länge des Blechpakets 48. Mit anderen Worten steht das Spaltrohr 26 beidseitig des Blechpakets 48 in axialer Richtung 4 über.

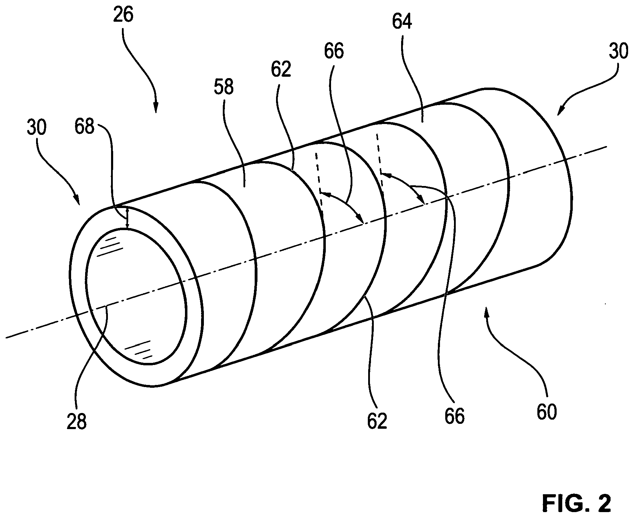

Fig. 2 zeigt in einer perspektivischen Ansicht das Spaltrohr 26, das einen Rohrmantel 58 aufweist. Der Rohrmantel 58 ist hohlzylindrisch und besteht aus einem Faserverbundwerkstoff 60 mit einer Faser 62, die in eine Matrix 64 eingebettet ist.

Die Faser 62 besteht aus Glas und die Matrix 64 ist Epoxidharz, so dass der Faserverbundwerkstoff 60 ein glasfaserverstärkter Kunststoff ist. Die Faser 62 weist gegenüber der Rohrlängsrichtung 28 einen Wickelwinkel 66 auf. Mit anderen Worten wird bei der Herstellung des Spaltrohrs 26 beispielsweise die Faser 62 in einem bestimmten Winkel, nämlich dem Wickelwinkel 66, um einen Rohling herumgeschlungen oder auf diesen aufgerollt, wobei der Rohling zylinderförmig ist, und dessen Außendurchmesser im Wesentlichen dem Innendurchmesser des Spaltrohrs 26 entspricht. Die Zwischenräume zwischen den einzelnen Abschnitten der Faser 62 werden mittels der Matrix 64 aufgefüllt. Der Wickelwinkel 66 ist im Wesentlichen über die Länge des Spaltrohrs 26 konstant, kann jedoch im Bereich der Stirnseiten 30 des Spaltrohrs variieren. Der Wickelwinkel 66 beträgt zumindest über eine vergleichsweise große Länge des Spaltrohrs 26 hinweg 88°.

Die Manteldicke 68 des Rohrmantels 58 beträgt 1,4mm. Somit kann der Luftspalt (Ringraum) zwischen dem Stator 46 und dem Rotor 20 vergleichsweise gering ausfallen, wobei dennoch, unter anderem aufgrund der Wahl des Wickelwinkels 66, das Spaltrohr 26 eine vergleichsweise hohe Stabilität aufweist und das Kühlfluid 42 sicher innerhalb des Statorraums 24 hält.

### Bezugszeichenliste

- 2: elektrische Maschine
- 4: axiale Richtung
- 6: radiale Richtung
- 8: Rotationsachse
- 10: Maschinengehäuse
- 12: A-seitiger Lagerschild
- 14: B-seitiger Lagerschild
- 16: Lager
- 18: Kragen
- 20: Rotor
- 22: Rotorraum
- 24: Statorraum
- 26: Spaltrohr
- 28: Rohrlängsrichtung
- 30: Stirnseite
- 32: Manschette
- 34: erster Axialabschnitt
- 36: zweiter Axialabschnitt
- 38: Dichtung
- 40: Dichtung
- 42: Kühlfluid
- 44: Abdichtschicht
- 46: Stator
- 48: Blechpaket
- 50: Wickelpaket
- 52: axialer Abschnitt
- 54: Wickelkopf
- 56: Wirkbereich
- 58: Rohrmantel
- 60: Faserverbundwerkstoff
- 62: Faser
- 64: Matrix
- 66: Wickelwinkel
- 68: Manteldicke

## Patentansprüche

1. Elektrische Maschine (2), insbesondere Elektromotor, mit einem zwischen einem Stator (46) und einem Rotor (20) angeordneten einstückigen Spaltrohr (26),
- wobei das Spaltrohr (26) einen hohlzylindrischen Rohrmantel (58) aufweist, der aus Faserverbundwerkstoff (60) besteht, und
- wobei die Manteldicke (68) des Spaltrohrs (26) kleiner als 2,5mm und größer als 0,5mm ist,
**dadurch gekennzeichnet,**
- **dass** das Spaltrohr (26) innerhalb eines Maschinengehäuses (10) mit einem Kühlfluid (42) außendruckbelastet ist,
- **dass** das Spaltrohr (26) beidseitig auf jeweils eine Manschette (32) axial aufgesetzt ist,
- **dass** jede der Manschetten (32) auf einen Kragen (18) eines Lagerschildes (12, 14) des Maschinengehäuses (10) aufgesetzt ist, und
- **dass** jede der Manschetten (32) einen in das Spaltrohr (26) hineinragenden ersten Axialabschnitt (34) und einen sich daran anschließenden zweiten Axialabschnitt (36) aufweist, mit dem das Spaltrohr (26) fluchtet.

2. Elektrische Maschine (2) nach Anspruch 1,
**dadurch gekennzeichnet,**
**dass** die jeweilige Manschette (32) gegenüber dem Spaltrohr (26) und dem Kragen (18) jeweils mittels einer Dichtung (38, 40) abgedichtet ist.

3. Elektrische Maschine (2) nach Anspruch 1 oder 2,
**gekennzeichnet dadurch,**
**dass** der Faserverbundwerkstoff (60) ein glasfaserverstärkter Kunststoff ist, und dass der Wickelwinkel (66) zwischen der Rohrlängsrichtung (28) und der Faser (62) des Faserverbundwerkstoffs (60) kleiner als 90° und größer als 70°, insbesondere größer als 75°, ist.

4. Elektrische Maschine (2) nach Anspruch 3,
**dadurch gekennzeichnet,**
**dass** der Winkelwinkel (66) größer als 80° und insbesondere 88° ist.

5. Elektrische Maschine (2) nach einem der Ansprüche 1 bis 4,
**dadurch gekennzeichnet,**
**dass** der Rohrmantel (58) außenseitig mittels einer Abdichtschicht (44), insbesondere mittels eines Polymers, beschichtet ist.

6. Elektrische Maschine (2) nach einem der Ansprüche 1 bis 5,
**dadurch gekennzeichnet,**
**dass** das Maschinengehäuse (10) eine axiale Wärmeausdehnung aufweist, die gleich der Wärmeausdehnung des Spaltrohrs (26) in Rohrlängsrichtung (28) ist.

7. Elektrische Maschine (2) nach einem der Ansprüche 1 bis 6,
**gekennzeichnet durch**
eine Leistung kleiner 1MW und insbesondere zwischen 50kW und 500kW.

## Claims

1. Electric machine (2), in particular an electric motor, having a one-piece can (26) which is arranged between a stator (46) and a rotor (20),
- wherein the can (26) has a hollow-cylindrical tubular casing (58), which is composed of composite fiber material (60), and
- wherein the casing thickness (68) of the can (26) is less than 2.5 mm and greater than 0.5 mm, **characterized**
- **in that** the can (26) is loaded with external pressure by means of a cooling fluid (42) within a machine housing (10),
- **in that** the can (26) is fitted axially on both sides onto a sleeve (32) in each case,
- **in that** each of the sleeves (32) is fitted onto a collar (18) of an end plate (12, 14) of the machine housing (10), and
- **in that** each of the sleeves (32) has a first axial section (34) which projects into the can (26) and a second axial section (36) which adjoins the latter and with which the can (26) is aligned.

2. Electric machine (2) according to Claim 1,
**characterized**
**in that** the respective sleeve (32) is sealed with respect to the can (26) and the collar (18), in each case by means of a gasket (38, 40).

3. Electric machine (2) according to Claim 1 or 2,
**characterized**
**in that** the composite fiber material (60) is a glass-fiber-reinforced plastic, and in that the winding angle (66) between the longitudinal direction (28) of the can tube and the fiber (62) of the composite fiber material (60) is less than 90° and greater than 70°, in particular greater than 75°.

4. Electric machine (2) according to Claim 3,
**characterized**
**in that** the winding angle (66) is greater than 80° and is, in particular, 88°.

5. Electric machine (2) according to one of Claims 1 to 4,
**characterized**
**in that** the tubular casing (58) is coated on the outside by means of a coating layer (44), in particular by means of a polymer.

6. Electric machine (2) according to one of Claims 1 to 5,
**characterized**
**in that** the machine housing (10) has axial thermal expansion which is equal to the thermal expansion of the can (26) in the longitudinal direction (28) of the can tube.

7. Electric machine (2) according to one of Claims 1 to 6,
**characterized by**
a power level of less than 1 MW and, in particular, between 50 kW and 500 kW.

## Revendications

1. Machine électrique (2), en particulier un moteur électrique, comprenant une gaine monobloc (26) disposée entre un stator (46) et un rotor (20),
- la gaine (26) comportant une enveloppe cylindrique creuse (58) en un matériau composite (60) à base de fibres, et
- l'épaisseur d'enveloppe (68) de la gaine (26) étant inférieure à 2,5 mm et supérieure à 0,5 mm, **caractérisée en ce que**
- la gaine (26) est soumise extérieurement à la pression d'un fluide de refroidissement (42) à l'intérieur d'un carter de machine (10),
- la gaine (26) est placée axialement des deux côtés à chaque fois sur un manchon (32),
- chacun des manchons (32) est placé sur une collerette (18) d'une plaque de support (12, 14) du carter de machine (10), et
- chacun des manchons (32) comporte une première partie axiale (34) saillant dans la gaine (26) et une deuxième partie axiale (36), adjacente à la première, avec laquelle la gaine (26) est alignée.

2. Machine électrique (2) selon la revendication 1,
**caractérisée en ce que**
le manchon respectif (32) est rendu étanche par rapport à la gaine (26) et à la collerette (18) à chaque fois par un joint d'étanchéité (38, 40).

3. Machine électrique (2) selon la revendication 1 ou 2,
**caractérisée en ce que**
le matériau composite (60) à base de fibres est une matière synthétique renforcée par des fibres de verre et **en ce que** l'angle d'enroulement (66) entre la direction longitudinale (28) de la gaine et les fibres (62) du matériau composite (60) renforcé par des fibres est inférieur à 90° et supérieur à 70°, en particulier supérieur à 75°.

4. Machine électrique (2) selon la revendication 3,
**caractérisée en ce que**
l'angle d'enroulement (66) est supérieur à 80° et en particulier est de 88°.

5. Machine électrique (2) selon l'une des revendications 1 à 4,
**caractérisée en ce que**
l'enveloppe de gaine (58) est revêtue du côté extérieur au moyen d'une couche d'étanchéité (44), en particulier au moyen d'un polymère.

6. Machine électrique (2) selon l'une des revendications 1 à 5,
**caractérisée en ce que**
le carter de machine (10) présente une dilatation thermique axiale égale à la dilatation thermique de la gaine (26) dans la direction longitudinale (28) de la gaine.

7. Machine électrique (2) selon l'une des revendications 1 à 6,
**caractérisée par**
une puissance inférieure à 1 MW et en particulier comprise entre 50 kW et 500 kW.
